# EUROPEAN PATENT APPLICATION

(11) **EP 4 588 711 A1**
(43) Date of publication of application: **23.07.2025**
(21) Application number: 23865949.4
(22) Date of filing: 13.09.2023
(51) Int. Cl.: B60L 50/70, B60S 5/02, F17C 13/00

(54) **FUEL STORAGE AND SUPPLY SYSTEM FOR VEHICLE FUEL CELLS**

(30) Priority: 15.09.2022 RU 2022124409
(71) Applicant: Obshchestvo s Ogranichennoi Otvetstvennostiu "Evokargo", Moscow, 129085 (RU)
(72) Inventor: BUTOV, Lev Nikolaevich, Moscow, 115446 (RU); PYRKOV, Pavel Vladimirovich, Kuzneck, 442544 (RU); BOCHAROVA, Anastasiya Borisovna, pgt. Afipskij, 353235 (RU); BOLSHAKOV, Andrej Sergeevich, Moscow, 125363 (RU); POPPEL, Anton Dmitrievich, Moscow, 109125 (RU)
(74) Representative: Osmans, Voldemars
(86) International application number: PCT/RU2023/050218
(87) International publication number: WO 2024/058684

(57) **Abstract**

The invention relates to systems for storing and supplying fuel to fuel cells as part of electrochemical generators designed to produce electricity, and power traction batteries and traction electric motors of electric vehicles and other highly automated vehicles. The technical result achieved by the proposed invention is to increase the safety of using high-pressure fuel storage and supply systems as part of mobile elements of vehicles. The specified technical result is achieved by the storage and fuel supply system for fuel cells, containing at least two composite hydrogen tanks interconnected by stainless steel tubes, which in turn are connected via an adapter to a high-pressure reducer and a fueling unit with a filling coupler and a pressure gauge; the high-pressure reducer is connected to a low-pressure reducer via a nylon tube, while the stainless-steel tube in the section between the adapter and the filling coupler has a U-shaped compensation bend, and in the section between the compensation bend and the adapter, the tube contains clips for attachment to the vehicle frame, and the low-pressure reducer has an outlet for connection with the input of the fuel cells of an electrochemical generator.

## Description

### FIELD OF THE INVENTION

The invention relates to systems for storing and supplying fuel to fuel cells as part of electrochemical generators designed to produce electricity, and power traction batteries and traction electric motors of electric vehicles and other highly automated vehicles.

### BACKGROUND

The following patent is known in the prior art: "Fuel cell automobile and release tube installation structure for gas fuel automobile" (patent CN1914057A, published 02/14/2007, MITK B60K1/04, B60K8/0, B60L11/18, F17C13/04, H01M8/04) and "Fuel cell system, and vehicle" (patent CN102481831B, published 06/17/2015, IPC B60K1/04, B60K8/00, B60L11/18, B62D25/20, H01M8/00, H01M8/04, H01M8/24), according to which, the fuel storage and supply system contains the following components and elements: two hydrogen cylinders connected to each other through an adapter, which in turn is connected through a valve to a tube mounted on the frame of the vehicle, while the tube is fixed on the vehicle frame, and the tube is connected to a pressure reducing valve, which in turn is connected to a fuel cell unit. These systems describe the composition of an electrochemical supply system that allows driving a vehicle, however, the described design assumes the presence of a chemical hydrogen generator, i.e., refueling of tanks is carried out via a generator within these systems, which means that rapid refueling of tanks with hydrogen under high pressure is not provided by the design.

A stack of fuel cells and a movable device (patent RU2359367 published 06/20/2009, IPC H01M8/04, H01M 8/00), containing a tank with hydrogen as a fuel supply source, containing hydrogen gas at high pressure (such as 70 MPa), a channel for supplying hydrogen through which hydrogen gas from a hydrogen tank enters the fuel cell, and a channel for circulating flow, which receives the exit hydrogen gas released from the fuel cell into the hydrogen supply channel. Instead of a hydrogen tank, a reformer can be used as a fuel supply source to generate reforming gas with a high hydrogen content from the fuel of a hydrocarbon system and a high-pressure gas tank, which is supplied with high-pressure reforming gas produced by the reformer. This analog describes a system for supplying hydrogen to fuel cells, but does not contain a complete technical solution that ensures the safe use of a system for fast refueling, storage and supply of gaseous fuel to fuel cells in electrochemical generators of electric vehicles and other highly automated vehicles.

### SUMMARY

The task set during the development of the proposed invention was to create a fuel (hydrogen) storage and supply system for fuel cells that provides the possibility of fast refueling and safe use in movable structural elements of electric vehicles and other highly automated vehicles.

The technical result achieved by the proposed invention is to increase the safety of using high-pressure hydrogen storage and supply systems as part of mobile structural elements of vehicles with high system capacity.

The claimed technical result is achieved by a fuel storage and supply system for fuel cells containing at least two composite hydrogen tanks interconnected by tubes made of stainless steel, which are connected through an adapter to a high-pressure reducer and a filling unit containing a filling coupler and a pressure gauge; the high-pressure reducer, in turn, is connected to the low-pressure reducer using a nylon tube, while the stainless steel tube in the section between the adapter and the coupler has a U-shaped compensation bend, and in the area between the compensation bend and the adapter, the tube contains clips for mounting to the vehicle frame, and the low-pressure reducer has an outlet for connecting to the input of the electrochemical generator fuel cells.

These technical features make it possible to safely replenish and store gaseous fuel under high pressure in vehicles with a movable structure, which allows increasing the range and time of use of the vehicle without additional refueling, as well as supplying gaseous fuel of required pressure into electrochemical power generation systems.

Composite hydrogen tanks allow to safely store a large supply of fuel under high pressure up to 350 bar.

Composite tanks are connected via stainless steel tubes with a refueling unit and a high-pressure reducer, thus forming a high-pressure line. Stainless steel tubes increase safety by reducing the possibility of mechanical damage to the integrity of the fuel supply line under high pressure. However, stainless steel tubes are subject to integrity violation during deformation occurring in a vehicle with moving parts.

To protect against the above-described integrity violation of stainless-steel tubes, the proposed technical solution contains a U-shaped compensation bend, which allows to ensure mobility between the parts connected by stainless steel tubes.

The high-pressure line is necessary to increase safety and ensure fast refueling with gaseous fuel under high pressure; the line is limited by composite tanks on one side, and by a filling coupler with a pressure gauge and a high-pressure reducer on the other side.

The high-pressure reducer allows to lower the pressure to 15 bar, which is required to increase safety without reducing efficiency of the gaseous fuel supply in the interval from the high-pressure reducer to the low-pressure reducer, while forming a low-pressure line, which in turn allows to use nylon tubes as a conductor of gaseous fuel in this segment; nylon tubes are highly safe due to flexibility and resistance to mechanical damage.

A low-pressure reducer allows to increase the accuracy of controlling the supply of gaseous fuel to the fuel cells of an electrochemical generator, which also increases the safety of using this technical solution in vehicles.

### DRAWINGS

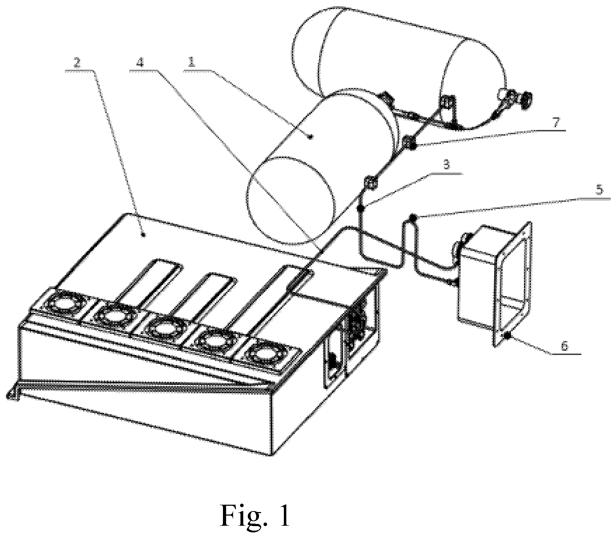

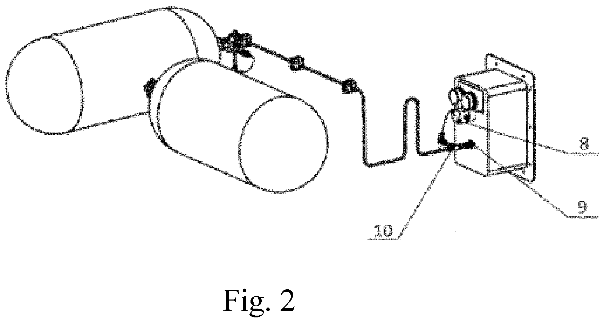

The technical essence of the invention is demonstrated in the drawings. Figure 1 shows a general view of the fuel storage and supply system for fuel cells; Figure 2 shows the high-pressure line of the fuel storage and supply system for fuel cells.

### DETAILED DESCRIPTION OF THE INVENTION

Fuel storage and supply system for fuel cells contains the following:
1. Composite tanks;
2. Fuel cell block;
3. Stainless-steel tube;
4. Nylon tube;
5. Compensation bend
6. Filling unit;
7. Clips for platform frame mounting;
8. High pressure reducer;
9. Filling coupler;
10. Adapter.

In the preferred embodiment, the invention is carried out as follows:

Hydrogen supplied from the outside through the filling coupler (9) as part of the filling unit (6) through a stainless-steel tube (3) is sent to composite tanks (1). Composite tanks (1) are connected to each other through a stainless-steel tube (3), which allows hydrogen refueling of all composite tanks (1) as part of the fuel storage and supply system for fuel cells.

The process of supplying hydrogen to the fuel cell unit (2) by the high-pressure line is carried out from combined composite tanks (1) by means of stainless-steel tubes (3). The hydrogen coming from composite tanks (1) is combined into a single stream at the junction of the tubes from the tanks and then goes through a stainless-steel tube (3). The stainless-steel tube (3) has clips to attach it to the vehicle platform (7), and a compensation bend (5), followed by an adapter (10). The adapter (10) is used for refueling; it connects to the filling coupler and also directs the flow of hydrogen through a stainless-steel tube to a high-pressure reducer (8), which in turn reduces the pressure from 350 bar to 15 bar.

A nylon tube (4) exits the high-pressure reducer (8), through which hydrogen enters the low-pressure reducer, which reduces the pressure from 15 bar to 2 bar, then hydrogen enters the fuel cell block (2), where it is distributed among the fuel cells.

A significant decrease in pressure from 350 bar to 15 bar leads to a rather significant error in determining pressure, affecting the safety of the fuel cells use, therefore a low-pressure reducer is necessary for the following:
1. Obtaining hydrogen flow at a lower pressure (favorable for the functioning of fuel cells).
2. Reducing the probability of error in determining the pressure level of hydrogen entering the fuel cells.

In addition, it is necessary to use a compensation bend (5) in the low-pressure line and a more flexible tube (4) in the section from the high-pressure reducer (8) to the low-pressure reducer inlet, because due to the system being used as part of the vehicle, the structure can move, vibrate and experience temperature deformations, leading to damage to the integrity of the fuel storage and supply system of the fuel cells.

It is also worth considering the possibility of emergencies, which may cause distortion of the vehicle body, and this may lead to positional shift of the stainless-steel tubes. Thus, the compensation bend (5) and the nylon tube (4) are designed to ensure the mobility of the system parts relative to each other.

Thus, the implementation of the described fuel storage and supply system for fuel cells will increase the safety of using electrochemical power generation systems as part of mobile structural elements of vehicles.

## Claims

1. A hydrogen storage and supply system for vehicle fuel cells containing composite tanks connected to each other and to the fuel cell by a hydrogen supply channel, wherein
the composite tanks are interconnected by stainless-steel tubes, which are connected to a high-pressure reducer and a filling unit;
the filling unit containing a filling coupler and a pressure gauge;
the high-pressure reducer is connected to a low-pressure reducer via a nylon tube, and the low-pressure reducer has an outlet for connection to the input of the fuel cells of an electrochemical generator.

2. The hydrogen storage and supply system according to claim 1, wherein the stainless-steel tube in the area between an adapter and the filling coupler has a U-shaped compensation bend.

3. The hydrogen storage and supply system according to claim 1 or 2, wherein the stainless-steel tube in the area between the compensation bend and composite tanks contains clips for attachment to a vehicle frame.
